# EUROPÄISCHE PATENTSCHRIFT

(11) **EP 0 968 620 B1**
(45) Veröffentlichungstag und Bekanntmachung des Hinweises auf die Patenterteilung: **04.12.2002**
(21) Anmeldenummer: 98916850.5
(22) Anmeldetag: 04.03.1998
(51) Int. Cl.: H04Q 7/38

(54) **ANORDNUNG ZUR ÜBERGABE EINER BIDIREKTIONALEN FUNKVERBINDUNG**
DEVICE FOR TRANSFERRING A BI-DIRECTIONAL RADIO LINK
DISPOSITIF POUR TRANSFERER UNE LIAISON RADIO BIDIRECTIONNELLE

(30) Priorität: 21.03.1997 DE 19712047
(43) Veröffentlichungstag der Anmeldung: 05.01.2000
(73) Patentinhaber: Tenovis GmbH & Co. KG, 60362 Frankfurt am Main (DE); DeTeWe - Deutsche Telephonwerke Aktiengesellschaft & Co., 10997 Berlin (DE)
(72) Erfinder: EINFALT, Georg, D-85551 Kirchheim (DE); GUETTLER, Bernhard, D-82256 Fürstenfeldbruck (DE); BECKER, Thomas, D-13467 Berlin (DE); DUMMANN, Uwe, D-13409 Berlin (DE)
(74) Vertreter: Patentanwaltskanzlei WILHELM & BECK
(86) Internationale Anmeldenummer: DE9800637
(87) Internationale Veröffentlichungsnummer: WO98043452

(56) Entgegenhaltungen:
- EP-A- 0 639 036
- EP-A- 0 671 857
- EP-A- 0 802 693
- WO-A-96/38990
- DE-A- 4 236 088
- US-A- 4 628 308
- US-A- 5 325 419
- PILGER U: "STRUKTUR DES DECT-STANDARDS" NACHRICHTENTECHNIK ELEKTRONIK, Bd. 42, Nr. 1, Januar 1992, Seiten 23-29, XP002016869 in der Anmeldung erwähnt

## Beschreibung

Die vorliegende Erfindung betrifft eine Anordnung zur Übergabe einer bidirektionalen Funkverbindung zwischen einem ersten Teilnehmer und einem weiteren Teilnehmer von einer ersten Funkbasisstation an eine weitere Funkbasisstation, wobei die erste und die weitere Funkbasisstation über ein Vermittlungssystem in Verbindung stehen.

### Stand der Technik

In Nachrichtentechnik-Elektronik 42 (1992), Nr. 1, Seiten 23 bis 29 ist die Struktur des DECT-Standards beschrieben. Grundkomponenten eines DECT-Systems sind Funkbasisstationen und Handgeräte. Eine Funkbasisstation (DECT-Feststation) ist mit einem öffentlichen oder privaten Vermittlungssystem verbunden, so daß Verbindungen vom Handgerät aus über eine Funubasisstation zu einem entfernten Teilnehmer in einem übergeordneten Kommunikationsnetz -und umgekehrt- aufgebaut werden können oder innerhalb des öffentlichen oder privaten Vermittlungssystems.

Aufgrund der Ausbreitungseigenschaften der Funkwellen und der gemäß der DECT-Norm vorgegebenen Sendeleistung erreichen Funkbasisstationen beziehungsweise Handgeräte im Freifeld eine Reichweite von 100 Metern und mehr. Innerhalb von Gebäuden ist jedoch die typische Reichweite insbesondere infolge der Dämpfung durch Wände erheblich geringer, so daß dort der Versorgungsbereich einer Funkbasisstation auf den Umkreis weniger Meter beschränkt sein kann. Um die Versorgung eines größeren Bereiches, z.B. eines Bürohauses oder Firmengeländes sicherzustellen, wird ein System mit mehreren Funkbasisstationen gebildet, deren Funkzellen sich überlappen. Bewegt sich der Benutzer mit seinem Handgerät während einer Gesprächsverbindung innerhalb des Systems, so versucht das Handgerät bei Verlassen des Empfangs-/Sendebereiches einer Funkbasisstation automatisch die Gesprächsverbindung über eine andere Funkbasisstation des Systems fortzusetzen. Dieser Vorgang ist als "Handover" (Übergabe der Funkverbindung) bekannt.

Um einen hohen Gesprächskomfort zu gewährleisten, soll das Handover für den Benutzer unbemerkt (seamless) erfolgen, das heißt eine auftretende Unterbrechung der Verbindung durch das Handover soll so kurz wie möglich sein. Eine wichtige Voraussetzung hierfür ist, daß synchron mit dem Handover der Funkkomponenten auch eine Umschaltung der Nutzkanäle im Vermittlungssystem erfolgt. Von den beteiligten Funkbasisstationen erhält das Vermittlungssystem Signalisierungsinformationen über die Durchführung des Handovers und muß seinerseits die Nutzkanäle von der ersten auf die zweite Punkbasisstation umschalten. Bei DECT erfolgt die Initiierung des Handovers immer durch das tragbare Handgerät.

Stellt das Handgerät fest, daß sich eine bestehende Verbindung verschlechtert, baut es parallel zu dieser Verbindung eine zweite auf, die auf einem Eintrag in seiner Kanalliste basiert (Nachrichtentechnik-Elektronik 42(1992), Nr. 1, Seite 28).

Aus der US-A-5,325,419 ist eine Anordnung zur Übergabe einer bidirektionalen Nutzverbindung nach den Merkmalen des Oberbegriffs des Anspruchs 1 bekannt. Die EP-A-0 671 857 zeigt weiter eine Anordnung zur Koordinierung eins Zugriffs mehrerer Nachrichtenquellen auf einen Bus. Für einen solchen Zugriff ist eine zusätzliche Steuerleitung vorgesehen, die mit einem Pull-Down-Widerstand geschaltet ist. Ferner sind am Ausgang der Steuerleitung Open-Kollektor-Stufen vorgesehen.

Aufgabe der vorliegenden Erfindung ist es eine Anordnung bereitzustellen, mit der sich der Zugriff mehrerer Funkstationen auf einen gemeinsamen Bus einfach und zuverlässig realisieren lässt.

Diese Aufgabe wird durch eine Anordnung nach Anspruch 1 gelöst. Bevorzugte Ausgestaltungen sind in den abhängigen Ansprüchen angegeben.

Gemäß der Erfindung ist eine Übergabe einer Funkverbindung möglich, die von einem Funkteilnehmer asynchron zum Vermittlungssystem ausgelöst wird, ohne daß vom Benutzer feststellbare Unterbrechungen auftreten. Das Verfahren beziehungsweise die Anordnung nach der Erfindung läßt sich vorteilhaft für Funkverbindungen nach dem DECT-Standard verwenden. Zur Signalisierung und Quittierung, das heißt zur Verbindungssteuerung eignen sich insbesondere die im ISDN bekannten D-Kanäle. Für die Sprach- oder Nutzdatenübertragung wird vorzugsweise mindestens ein B-Kanal benutzt. Um eine möglichst frühzeitige Signalisierung eines Umschaltwunsches zu ermöglichen, wird für das Umschaltkriterium ein entsprechender Fehlerschwellwert herangezogen.

Mit den Maßnahmen gemäß der Erfindung ist es möglich, während einer noch nicht abgeschlossenen Übergabe der Funkverbindung wieder auf die ursprüngliche Funkbasisstation zurückzuschalten, wenn sich die Funkverbindung über diese Funubasis Station wieder verbessert.

Durch den erfindungsgemäßen Aufbau einer parallelen Nutzkanalverbindung vor der eigentlichen Übergabe beziehungsweise Abschalten der Nutzkanalverbindung nach der Übergabe, gibt es nur noch einen einzigen relevanten Umschaltvorgang, der bei einem Teilnehmer und damit von der Quelle des Handovers vorgenommen wird. Alle Schaltvorgänge im Vermittlungssystem vor beziehungsweise nach der Übergabe sind nicht mehr zeitkritisch, das Handover läuft für den Benutzer unbemerkt (seamless) ab.

### Zeichnungen

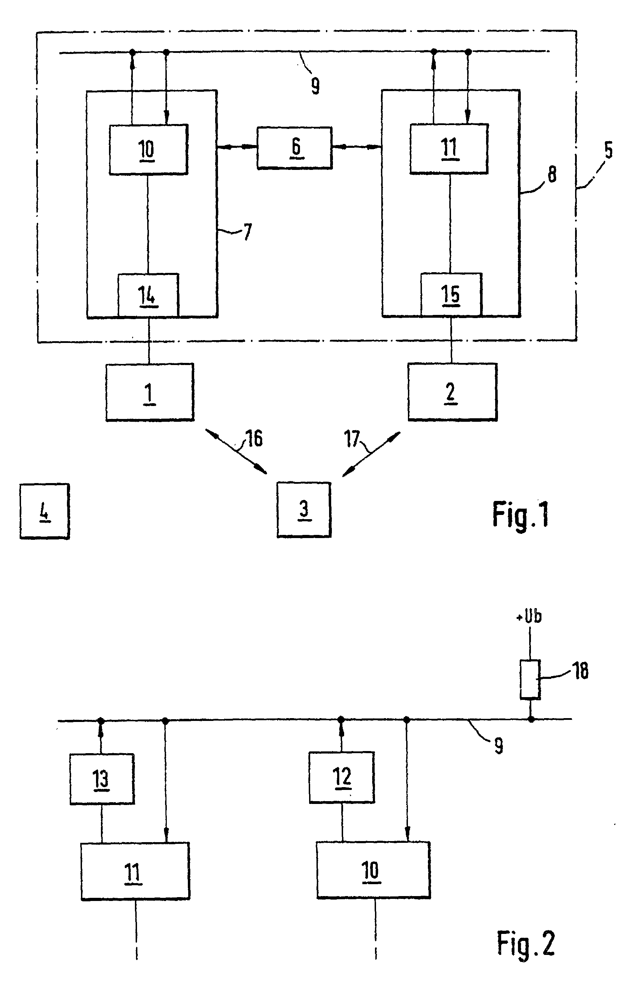

Anhand der Zeichnungen werden bisherige und erfindungsgemäße Lösungen erläutert. Es zeigen; Figur 1 ein Blockschaltbild der Anbindung zweier Funkbasisstationen an ein Vermittlungssystem und Figur 2 eine erfindungsgemäße Ausbildung der Anschaltung einer Zugriffseinheit an einen Zeitmultiplex-Verbindungskanal.

### Beschreibung von Ausführungsbeispielen

Figur 1 zeigt zwei Funkbasisstationen 1 und 2, die an ein Vermittlungssystem 5 über besondere Anschlußorgane 14 und 15 angeschaltet sind. Von einem ersten Teilnehmer 3, vorzugsweise einem Handgerät, das nach dem DECT-Standard arbeitet, wird eine bidirektionale Funkverbindung 16 über die erste Funkbasisstation 1 oder die weitere Funkbasisstation 2 (Funkverbindung 17) zu einem weiteren Teilnehmer 4 geschaltet.

Für die Anschaltung der Funkbasisstation 1 beziehungsweise 2 an das Vermittlungssystem 5 finden neben der analogen a/b-Schnittstelle zunehmend ISDN-Schnittstellen Verwendung, insbesondere die S₀-Schnittstelle nach ETS-300012 oder die Uₚ₀-Schnittstelle (im ZVEI erarbeiteter Industriestandard für eine digitale Zweidraht-Schnittstelle). Derartige digitale Schnittstellen enthalten typischerweise den Signalisierungskanal zur Verbindungssteuerung (D-Kanal) sowie Nutzkanäle zur Sprach- oder Nutzdatenübertragung (B-Kanäle). Eine Funkbasisstation kann je nach Ausstattung mit einer oder mehreren Schnittstellen mit dem Vermittlungssystem 5 verbunden sein und Verbindungen mit einem oder mehreren Handgeräten oder Feststationen gleichzeitig abwickeln.

Die Funkbasisstationen 1 beziehungsweise 2 sind mittels der erwähnten S₀ oder Uₚ₀-Schnittstellen an die Anschlußorgane 14 beziehungsweise 15 des Vermittlungssystems 5 angeschaltet. Die Anschlußorgane sind Bestandteil von Anschlußeinheiten 7 beziehungsweise 8, die ihrerseits einen Zugriff auf einen Zeitmultiplex-Verbindungskanal 9 des Vermittlungssystems 5 ermöglichen. Als Zeitmultiplex-Verbindungskanal 9 kommen innerhalb von digitalen beziehungsweise ISDN-Vermittlungssystemen häufig PCM-Highways zum Einsatz, mittels der die zu vermittelnden Nutzinformationen im Zeitmultiplexverfahren übertragen beziehungsweise vermittelt werden. Der Zugriff auf den PCM-Highway erfolgt meist per Push-Pull-Stufe, die für die einer Anschlußeinheit 7 beziehungsweise 8 zugeteilten Sendezeitschlitze freigeschaltet wird. Viele Funktionen der Anschlußeinheit sind heute Bestandteil hochintegrierter Schaltungen, zum Beispiel Siemens PEB 20550, unter anderem auch die Zugriffssteuerung auf den PCM-Highway 9.

Ein üblicher Ablauf des Handovers ist wie folgt: Das Handgerät 3 hat eine aktive Nutzkanalverbindung über die Strecke Funkbasisstation 1, Anschlußorgan 14, Highway-Zugriffseinheit 10 zum PCM-Highway 9 und von dort zu einem entfernten Teilnehmer 4, dessen zugeordnete Anschlußeinheit aus Gründen der Übersichtlichkeit nicht dargestellt ist.

Bewegt sich nun der Benutzer mit seinem Handgerät 3 in Richtung Funkbasisstation 2 und entfernt sich von Funkbasisstation 1, so nimmt die Qualität der Funkverbindung zur Funkbasisstation 1 ab, während sich die Qualität der Funkverbindung zur Funkbasisstation 2 verbessert. Bei Erreichen einer vorgegebenen Schwellwertbedingung leitet das Handgerät das Handover gemäß dem für die Funkschnittstelle in ETS 300175 beschriebenen Verfahren ein. Kriterien für ein Handover sind zum Beispiel Feldstärkeschwankungen, Frame-Error-Rate FER und Bit-Error-Rate BER.

Über die Funkbasisstation 2 erhält die Vermittlungssteuerung 6 des Vermittlungssystems 5 per D-Kanal-Signalisierung Kenntnis von der Anforderung des Handgeräts 3, das Handover durchzuführen. Die Vermittlungssteuerung 6 trennt nun die Nutzkanalverbindung für beide Richtungen (Sende- und Empfangspfad) zum PCM-Highway 9 über die Highway-Zugriffseinheit 10 auf und gibt per D-Kanal-Signalisierung über die Funkbasisstation 2 dem Handgerät 3 die Durchführung des Handovers frei. Nach Empfang der Freigabe schaltet das Handgerät 3 die Nutzkanalverbindung von Funkbasisstation 1 auf Funkbasisstation 2. Mit oder nach Freigabe des Handovers schaltet ferner die Vermittlungssteuerung 6 die Nutzkanalverbindung über die Highway-Zugriffseinheit 11 und Anschlußorgan 15 zur Funkbasisstation 2.

Da die Nutzkanalverbindung über Highway-Zugriffseinheit 11, Anschlußorgan 15, Funkbasisstation 2 erst geschaltet wird, nachdem die Nutzkanalverbindung über die Highway-Zugriffseinheit 10, Anschlußorgan 14, Funkbasisstation 1 aufgetrennt wurde, ergibt sich eine Verbindungslücke. Lücken im Bereich unter 100 Millisekunden werden vom Benutzer üblicherweise subjektiv nicht wahrgenommen. Es ist jedoch nicht auszuschließen, daß die Lücke bei Belastung der Vermittlungssteuerung 6 durch konkurrierende Vorgänge (Multitasking) länger ausfällt. Aufgrund von Bitfehlern auf dem zur Signalisierung zwischen Vermittlungssystem 5 und Funkbasisstation verwendeten D-Kanal oder auf der Funkübertragungsstrecke 16 zwischen Funkbasisstation und Handgerät kann ferner ein Verlust von Meldungen eintreten, so daß erst die Wiederholung der Meldung fehlerfrei aufgenommen werden kann, was auch zu einer Verzögerung führt. Diese Effekte können alleine oder in Kombination dazu führen, daß für den Benutzer merkbare Unterbrechungen der Nutzsignalübertragung auftreten.

Mit den Mäßnahmen nach der Erfindung läßt sich, wie nachfolgend noch erläutert wird, die Unterbrechung, die beim Handover auftreten kann, minimieren, wobei das Hauptproblem wie beschrieben darin liegt, daß das Handover vom Handgerät asynchron zum Vermittlungssystem ausgelöst wird.

Die hardwaremäßige Voraussetzung im Vermittlungssystem 5 ist, daß die Anschlußeinheiten 7 beziehungsweise 8, wie Figur 2 zeigt, auf den PCM-Highway nicht mit einer Push-Pull-Stufe, sondern erfindungsgemäß mittels einer Open-Kollektor-Stufe zugreifen. Der PCM-Highway 9 ist dabei mit einem Pull-up-Widerstand 18 versehen, der sicherstellt, daß sich auf nicht belegten Zeitschlitzen beziehungsweise auf Bits belegter Zeitschlitze, die von einer der Open-Kollektor-Stufen 12, 13 nicht auf "O" gezogen sind, ein "1"-Potential durchsetzt. Die Open-Kollektor-Stufen 12, 13 ermöglichen es, daß ein Zeitschlitz des PCM-Highways 9 von mehreren Anschlußeinheiten konkurrierend benutzt werden kann, wobei sich "O"-Bits durchsetzen. Die Open-Kollektor-Stufen 12, 13 können mit diskreten Bauelementen aufgebaut sein oder in integrierten Schaltkreisen, die in Anschlußeinheiten Verwendung finden, bereits integriert sein.

Der Steuerungsablauf des Handovers wird erfindungsgemäß wie folgt modifiziert:

Ausgangspunkt ist wieder eine aktive Nutzkanalverbindung vom Handgerät 3 über die Strecke Funkbasisstation 1, Anschußorgan 14, Highway-Zugriffseinheit 10 mit Open-Kollektor-Stufe 12 in Senderichtung zum PCM-Highway 9 und von dort zu einem entfernten Teilnehmer 4. Bewegt sich der Benutzer mit seinem Handgerät 3 in Richtung Funkbasisstation 2 und entfernt sich von Funkbasisstation 1, nimmt die Qualität der Funkverbindung 16 zur Funkbasisstation 1 ab. Die Einleitung des Handovers wird im Handgerät 3 so modifiziert, daß das Handgerät die Möglichkeit eines Handovers frühzeitig an das Vermittlungssystem 5 signalisiert (Hysterese). Hierzu wird insbesondere für die Gewinnung des Umschaltkriteriums ein Fehlerschwellwert herangezogen, der so gewählt ist, daß eine frühzeitige Signalisierung eines Umschaltwunsches zur Vermittlungssteuerung 6 des Vermittlungssystems 5 ermöglicht wird. Über die Funkbasisstation 2 erhält die Vermittlungssteuerung 6 des Vermittlungssystem 5 per D-Kanal Kenntnis von der Anforderung des Handgeräts 3 das Handover durchzuführen. Die Vermittlungssteuerung 6 schaltet nun beide Richtungen der Nutzkanalverbindung über Highway-Zugriffseinheit 11 mit Open-Kollektor-Stufe 13 in Senderichtung und Anschlußorgan 15 zur Funkbasisstation 2, parallel zur noch bestehenden Nutzkanalverbindung über Anschlußeinheit 7. Eine Funkbasisstation ist derart ausgestaltet, daß sie auf dem Nutzkanal in Richtung Vermittlungssystem 5, auf dem das Handover noch nicht stattgefunden hat "1"-Bits sendet, so daß die zugehörige Open-Kollektor-Stufe 13 sich im Zugriff zum PCM-Highway 9 neutral verhält. Nun wird über den D-Kanal zur Funkbasisstation 2 dem Handgerät 3 das Handover freigegeben. Das Handgerät 3 schaltet die Nutzkanalverbindung von Funkbasisstation 1 auf Funkbasisstation 2. Eine Funkbasisstation ist ferner derart ausgebildet, daß sie auf dem Nutzkanal in Richtung Vermittlungssystem 5, auf dem das Handover bereits abgewickelt wurde, "1"-Bits sendet, so daß die zugehörige Open-Kollektor-Stufe 13 sich im Zugriff zum PCM-Highway neutral verhält. Die Bitzuordung kann natürlich auch anders sein. Es ist lediglich sicherzustellen, daß sich solche Bits durchsetzen, die in ihrer Wertigkeit dem Ruhezustand entsprechen. Erst nach der Quittierung des Handovers durch die Funkbasisstation 2 trennt nun die Vermittlungssteuerung 6 die ehemalige Verbindung von Funkbasisstation 1 über Anschlußorgan 14 zur Highway-Zugriffseinheit 10 auf. Sollte das Handgerät 3 während eines nicht abgeschlossenen Handovers erkennen, daß die erste Verbindung wieder besser wird, zum Beispiel weil sich der Teilnehmer zur Funkbasisstation 1 zurückbewegt, kann das Handgerät 3 über das Vermittlungssystem 5 auf die erste Funkverbindung zurückfallen, da diese erfindungsgemäß noch nicht ausgelöst ist.

Durch das Einschalten der Nutzkanalverbindung über Anschlußeinheit 8 vor dem Handover beziehungsweise Trennung der Nutzkanalverbindung über Anschlußeinheit 7 nach dem Handover in Verbindung mit den Open-Kollektor-Stufen 12, 13 in Senderichtung zum PCM-Highway 9 gibt es nur noch einen einzigen relevanten Umschaltvorgang, der im Handgerät und damit von der Quelle des Handovers vorgenommen wird. Alle Schaltvorgänge im Vermittlungssystem vor beziehungsweise nach dem Handover sind damit nicht mehr zeitkritisch, das Handover läuft für den Benutzer unbemerkt (seamless) ab. Die im Handgerät stattfindende Nutzkanalumschaltung ist damit von zeitkritischen Schaltvorgängen im Vermittlungssystem 5 entkoppelt.

## Patentansprüche

1. Anordnung zur Übergabe einer bidirektionalen Nutzkanalverbindung zwischen einem ersten Teilnehmer (3) und einem weiteren Teilnehmer (4) von einer ersten Funkbasisstation (1) an eine weitere Funkbasisstation (2), wobei die erste und die weitere Funkbasisstation über ein Vermittlungssystem (5) in Verbindung stehen, wobei
- der erste Teilnehmer (3) ausgerüstet ist seinen Umschaltwunsch zur Vermittlungssteuerung (6) des Vermittlungssystems (5) zu signalisieren,
- die Vermittlungssteuerung (6) ausgerüstet ist daraufhin eine Nutzkanalverbindung über die weitere Funkbasisstation (2) parallel zur noch bestehenden Nutzkanalverbindung über die erste Funkbasisstation (1) zu schalten und dem ersten Teilnehmer (3) zu signalisieren, dass er die Umschaltung der Nutzkanalverbindung zur weiteren Funkbasisstation (2) vornehmen kann,
- die Vermittlungssteuerung (6) ausgerüstet ist nach Übergabe der Funkverbindung durch den ersten Teilnehmer (3) und Quittierung der Übergabe durch die weitere Funkbasisstation (2) die Nutzkanalverbindung über die erste Funkbasisstation (1) zu trennen,
- die Funkbasisstationen (1, 2) jeweils über entsprechende Anschlusseinheiten (7, 8) verfügen, die von der Vermittlungssteuerung (6) des Vermittlungssystems (5) aktivierbar sind und an einen gemeinsam genutzten Zeitmultiplex-Verbindungskanal (9) mit einem Pull-Up-Widerstand (18) schaltbar sind,
- die Anschlusseinheiten (7, 8) Zugriffseinheiten (10, 11) mit Open-Kollektor-Stufen (12, 13) zum Zeitmultiplex-Verbindungskanal (9) aufweisen, die derart ausgebildet sind, dass ein Zeitschlitz des Zeitmultiplex-Verbindungskanals (9) von mehreren Anschlusseinheiten (7, 8) konkurrierend benutzt werden kann, **dadurch gekennzeichnet, dass** die Zugriffseinheiten mit Open-Kollektor-Stufen (12, 13) derart ausgebildet sind, dass sie selbst den Zeitmultiplex-Verbindungskanal (9) ansteuern, dass die Funkbasisstationen (1, 2) derart ausgerüstet sind, dass nach Aufbau zweier paralleler Nutzkanalverbindungen über zwei Funkbasisstationen (1, 2), vor Übergabe der Funkverbindung, sich die Funkbasisstation im deaktivierten Zustand befindet, über deren Nutzkanal die Übergabe der Funkverbindung noch nicht stattgefunden hat und nach Übergabe der Funkverbindung sich die Funkbasisstation im deaktivierten Zustand befindet, über deren Nutzkanal die Übergabe der Funkverbindung bereits abgewickelt wurde, wobei im jeweils deaktivierten Zustand ein Bitmuster zur jeweiligen Zugriffseinheit (10, 11) aussendbar ist, so dass sich die Open-Kollektor-Stufen (12, 13) der jeweiligen Zugriffseinheit bezüglich der Ansteuerung des Zeitmultiplex-Verbindungskanals (9) neutral verhalten.

2. Anordnung nach Anspruch 1, **dadurch gekennzeichnet, dass** als Zeitmultiplex-Verbindungskanal (9) ein an sich bekannter PCM-Highway vorgesehen ist.

3. Anordnung nach Anspruch 1 oder 2, **dadurch gekennzeichnet, dass** der Pull-Up-Widerstand (18) insbesondere sicherstellt, dass sich auf nicht belegten Zeitschlitzen des Zeitmultiplex-Verbindungskanals (9) solche Bits durchsetzen, die in ihrer Wertigkeit dem Ruhezustand entsprechen.

4. Anordnung nach einem der Ansprüche 1 bis 3, **dadurch gekennzeichnet, dass** für die Funkverbindung der DECT-Standard verwendet wird.

5. Anordnung nach einem der Ansprüche 1 bis 4, **dadurch gekennzeichnet, dass** die Signalisierung über einen D-Kanal des ISDN vorgenommen wird und die Sprach- oder Nutzdatenübertragung über mindestens einen B-Kanal erfolgt.

6. Anordnung nach einem der Ansprüche 1 bis 5, **dadurch gekennzeichnet, dass** für die Gewinnung des Umschaltkriteriums für die Funkverbindung ein Fehlerschwellwert herangezogen wird, der so gewählt ist, dass eine frühzeitige Signalisierung eines Umschaltwunsches, insbesondere zur Vermittlungssteuerung (6) des Vermittlungssystems (5), ermöglicht wird.

7. Anordnung nach einem der Ansprüche 1 bis 6, **dadurch gekennzeichnet, dass** eine Funkverbindung an die erste Funkbasisstation (1) zurückgeschaltet wird, wenn sich während einer noch nicht abgeschlossenen Übergabe die Funkverbindung über die erste Funkbasisstation (1) verbessert.

## Claims

1. An arrangement for the handover of a bidirectional useful channel communication between a first subscriber (3) and a further subscriber (4) from a first radio base station (1) to a further radio base station (2), wherein the first and the further radio base stations communicate by way of a switching system (5), wherein
- the first subscriber (3) is adapted to signal its switching-over wish to the switching control (6) of the switching system (5),
- the switching control (6) is adapted thereupon to switch a useful channel communication by way of the further radio base station (2) in parallel with the useful channel communication which still exists by way of the first radio base station (1) and to signal to the first subscriber (3) that it can effect switching-over of the useful channel communication to the further radio base station (2),
- the switching control (6) is adapted to disconnect the useful channel communication by way of the first radio base station (1) after handover of the radio communication by the first subscriber (3) and acknowledgement of the handover by the further radio base station (2),
- the radio base stations (1, 2) each have suitable connecting units (7, 8) which are activatable by the switching control (6) of the switching system (5) and can be switched to a jointly used time multiplex communication channel (9) with a pull-up resistor (18), and
- the connecting units (7, 8) have access units (10, 11) with open collector stages (12, 13) to the time multiplex communication channel (9), which are designed in such a way that a time slot of the time multiplex communication channel (9) can be competingly used by a plurality of connecting units (7, 8), **characterised in that** the access units are designed with open collector stages (12, 13) in such a way that they themselves control the time multiplex communication channel (9), that the radio base stations (1, 2) are equipped in such a way that after the establishment of two parallel useful channel communications by way of two radio base stations (1, 2), prior to handover of the radio communication, the radio base station, by way of the useful channel of which the handover of the radio communication has not yet occurred is in the deactivated condition and after handover of the radio communication the radio base station, by way of the useful channel of which handover of the radio communication had already taken place is in the deactivated condition, wherein in the respectively deactivated condition a bit pattern can be emitted to the respective access unit (10, 11) so that the open collector stages (12, 13) of the respective access unit behave neutrally with respect to control of the time multiplex communication channel (9).

2. An arrangement according to claim 1 **characterised in that** a per se known PCM highway is provided as the time multiplex communication channel (9).

3. An arrangement according to claim 1 or claim 2 **characterised in that** the pull-up resistor (18) in particular ensures that those bits which correspond in their value to the rest condition are transmitted on unoccupied time slots of the time multiplex communication channel (9).

4. An arrangement according to one of claims 1 to 3 **characterised in that** the DECT standard is used for the radio communication.

5. An arrangement according to one of claims 1 to 4 **characterised in that** signalling is effected by way of a D-channel of the ISDN and speech or useful data transmission is effected by way of at least one B-channel.

6. An arrangement according to one of claims 1 to 5 **characterised in that** for obtaining the switching-over criterion for the radio communication, a fault threshold is adopted which is so selected that early signalling of a switching-over wish, in particular to the switching control (6) of the switching system (5), is made possible.

7. An arrangement according to one of claims 1 to 6 **characterised in that** a radio communication is switched back to the first radio base station (1) if the radio communication by way of the first radio base station (1) improves during a handover which has not yet been concluded.

## Revendications

1. Dispositif pour transférer une liaison de canal utile bidirectionnel entre un premier poste (3) et un autre poste (4) d'une première station radio de base (1) à une autre station radio de base (2), la première et l'autre station radio de base étant reliées par un système de transmission (5), dispositif dans lequel
- le premier poste (3) est équipé de manière à signaler son souhait de commutation à la commande de transmission (6) du système de transmission (5),
- la commande de transmission (6) est équipée de façon à commuter une liaison de canal utile par l'autre station radio de base (2) en parallèle à la liaison de canal utile encore établie par la première station radio de base (1), et de façon à signaler au premier poste (13) qu'il peut effectuer la commutation de la liaison de canal utile sur l'autre station radio de base (2),
- la commande de transmission (6) est équipée de façon qu'après transfert de la liaison radio par le premier poste (3) et accusé de réception du transfert par l'autre station radio de base (2), elle coupe la liaison de canal utile par la première station radio de base (1),
- les stations radio de base (1, 2) disposent chacune d'unités de branchement respectives (7, 8) qui sont activées par la commande de transmission (6) du système de transmission (5) et peuvent être commutées sur un canal de liaison en multiplex dans le temps (9) utilisé en commun, avec une résistance (18) de relevage de tension,
- les unités de branchement (7, 8) comportent des unités d'accès (10, 11) avec des étages à collecteur ouvert (12, 13) vers le canal de liaison en multiplexage dans le temps (9), réalisées plusieurs unités de branchement (7, 8) utilisent en concurrence une fenêtre de temps du canal de liaison en multiplexage dans le temps (9),
**caractérisé en ce que**
les unités d'accès à étages à collecteur ouvert (12, 13) sont réalisées de façon à commander d'elles-mêmes le canal de liaison en multiplexage dans le temps (9),
les stations radio de base (1, 2) sont équipées de façon qu'après l'établissement de deux liaisons de canal utile, en parallèle, par deux stations radio de base (1, 2), avant le transfert de la liaison radio, la station de radio de base qui est à l'état désactivé, le transfère de la liaison radio n'ayant pas encore eu lieu par son canal utile, et après transfert de la liaison radio, la station radio de base, dont le canal utile a servi à l'exécution du transfert de la liaison radio, se trouve à l'état désactivé,
et dans chaque état désactivé, un modèle de bits est émis vers l'unité d'accès respective (10, 11) de façon que les étages à collecteur ouvert (12, 13) de l'unité d'accès respective se comportent de manière neutre vis-à-vis de la commande du canal de liaison en multiplexage dans le temps (9).

2. Dispositif selon la revendication 1,
**caractérisé en ce que**
le canal de liaison en multiplex dans le temps (9) est une autoroute PCM connue en soi.

3. Dispositif selon l'une quelconque des revendications 1 ou 2,
**caractérisé en ce que**
la résistance de relevage (18) assure en particulier que pour une fenêtre de temps non occupée du canal de liaison en multiplexage dans le temps (9), les bits dont la valeur correspond à l'état de repos passent dans le canal.

4. Dispositif selon l'une quelconque des revendications 1 à 3,
**caractérisé en ce que**
pour la liaison radio on utilise la norme DECT.

5. Dispositif selon l'une quelconque des revendications 1 à 4,
**caractérisé en ce qu'**
on signalise par l'intermédiaire d'un canal D de ISDN et la transmission des données vocales et des données utiles se fait par au moins un canal B.

6. Dispositif selon l'une quelconque des revendications 1 à 5,
**caractérisé en ce que**
pour obtenir le critère de commutation pour la liaison radio, on utilise un seuil d'erreurs choisi pour permettre de signaler à temps un souhait de commutation en particulier vers la commande de transmission (6) du système de transmission (5).

7. Dispositif selon l'une quelconque des revendications 1 à 6,
**caractérisé en ce qu'**
on commute en retard une liaison radio vers la première station radio de base (1) si pendant un transfert non encore terminé la liaison radio par l'intermédiaire de la première station radio de base (1) s'améliore.
